Europäisches Patentamt

European Patent Office

Office européen des brevets

(11) Veröffentlichungsnummer: **0 288 961 B1**

# EUROPÄISCHE PATENTSCHRIFT

(45) Veröffentlichungstag der Patentschrift: **06.11.91**

(51) Int. Cl.⁵: **C02F 3/12**

(21) Anmeldenummer: **88106632.8**

(22) Anmeldetag: **26.04.88**

(54) **Verfahren zur biologischen Behandlung stickstoffbelasteter Abwässer.**

(30) Priorität: **30.04.87 DE 3714370**

(43) Veröffentlichungstag der Anmeldung:
**02.11.88 Patentblatt 88/44**

(45) Bekanntmachung des Hinweises auf die
Patenterteilung:
**06.11.91 Patentblatt 91/45**

(84) Benannte Vertragsstaaten:
**BE DE ES FR GB IT NL**

(56) Entgegenhaltungen:
**AT-B- 335 382**
**DE-A- 3 508 126**
**US-A- 4 705 633**

**WO 86/03734**

**"LEHR - UND HANDBUCH DER ABWASSER-
TECHNIK", Band II, 2. Auflage, 1975. Verlag
von Wilhelm Ernst & Sohn, Berlin, München,
Düsseldorf S. 455 u. 601**

(73) Patentinhaber: **HOECHST AKTIENGESELL-
SCHAFT**
**Postfach 80 03 20**
**W-6230 Frankfurt am Main 80(DE)**

(72) Erfinder: **Bauer, Alexander, Dr.**
**Lerchenweg 3**
**W-6233 Kelkheim Taunus(DE)**
Erfinder: **Sell, Günther**
**Stettiner Strasse 84**
**W-6234 Hattersheim am Main(DE)**

## Beschreibung

Gegenstand der Erfindung ist ein Verfahren zu biologischen Behandlung von Abwässern mit erhöhtem Anteil an Stickstoffverbindungen, bei dem der Sauerstoffgehalt des Abwassers ($pO_2$) gemessen und die pro Zeiteinheit eingeblasene Luftmenge mit zunehmendem Sauerstoffgehalt gedrosselt wird.

Abwässer können neben den bekannten Verunreinigungen auch Stickstoffverbindungen als Abwasserinhaltsstoffe in verschiedenen Konzentrationen enthalten. Diese Stickstoffverbindungen z.B. Eiweißkörper, Amine, Harnstoffe, Ammoniumsalze, Nitrite und/oder Nitrate belasten den Vorfluter aufgrund ihres hohen Sauerstoffbedarfs, ihrer eutrophierenden Wirkung und den eventuell toxischen Effekten. Der Elimination dieser Abwasserinhaltsstoffe kommt daher immer stärkere Bedeutung zu.

Nach WO 86/03734 ist ein Verfahren zur biologischen Abwasserreinigung mit Nitrifikation und Denitrifikation bekannt, bei dem die Luftzufuhr und die Luftmenge in Abhängigkeit der im Abwasser gelösten Sauerstoffmenge geregelt wird.

Aus Korrespondenz Abwasser 34, (1987), Seite 80 ist ein Belebungsverfahren mit intermittierender Denitrifikation bekannt. Bei diesem Verfahren besteht keine ausgeprägte Trennung zwischen Nitrifikationszone und Denitrifikationszone. Die Elimination der Stickstoffverbindungen erfolgt in Teilschritten. In einem ersten Teilschritt wird der Stickstoff der organischen Substanzen mikrobiell weitgehend zu Ammonium umgebaut. Das Ammonium ist der Ausgangspunkt für eine biochemische Nitrifikation, bei der es in einem aeroben Milieu durch z.B. Nitrosamonasarten entsprechend der Gleichung

$$NH_4^+ + 1,5\ O_2 \rightarrow NO_2^- + 2H^+ + H_2O$$

zu Nitrit und das Nitrit durch z.B. Nitrobacterarten entsprechend der Gleichung

$$NO_2^- + 0,5\ O_2 \rightarrow NO_3^-$$

zu Nitrat umgesetzt wird. Da bei der Nitrifikation Wasserstoffionen freigesetzt werden, sinkt der pH-Wert bis schließlich ein Wert erreicht ist, der den gesamten biologischen Reinigungsprozeß zu stören vermag. Der Stoffwechsel der Nitrifikanten ist im pH-Bereich von 7 bis über 8 optimal. Schließlich wird in einem weiteren Teilschritt das Nitrit und das Nitrat in anoxischem Milieu durch fakultativ anaerobe, heterotrophe Bakteriengattungen wie z.B. Achromobacter, Denitrobacillus, Pseudomonas usw. zu $N_2$ reduziert. Die bei dieser Reaktion entstehenden OH-Ionen erhöhen den pH-Wert. Die Denitrifikation wird durch Messen des $NO_x$-Gehaltes gesteuert. Da die $NO_x$-Messung technisch aufwendig und damit störanfällig ist, besteht die Aufgabe zu vorliegender Erfindung darin, eine Verfahrenssteuerung zu schaffen, die zuverlässig arbeitet und die es gestattet, dieses spezielle biologische Verfahren optimal zu betreiben.

Gemäß der Erfindung wird die Aufgabe durch ein Verfahren gelöst, das dadurch gekennzeichnet ist, daß man in eine Vorlage aus Abwasser und Belebtschlamm Luft einleitet, die Luftzufuhr nach Erreichen eines vorgegebenen minimalen pH-Wertes abstellt, eine bestimmte Menge Schlamm-Wasser-Gemisch entnimmt, danach eine äquivalente Menge frisches Wasser zuführt und nach Erreichen eines vorgegebenen maximalen pH-Wertes erneut Luft und Rücklaufschlamm zuführt.

Die biologische Behandlung wird zweckmäßig zwischen 5° C und 50° C durchgeführt. Die Luftzufuhr kann durch Messen des pH-Wertes gesteuert werden, wobei man zweckmäßig den pH-Wert zwischen 5 und 10 hält. Die jeweilige Luftmenge kann über den Sauerstoffgehalt des Schlamm-Wasser-Gemisches geregelt werden. Das Schlamm-Wasser-Gemisch kann während der Behandlung auch kontinuierlich entnommen und die äquivalente Menge frischen Abwassers kontinuierlich zugeführt werden.

Das erfindungsgemäße Verfahren bietet folgende Vorteile: Der Prozeßablauf läßt sich durch An- und Abstellen der Luftzufuhr über den pH-Wert steuern und im optimalen Bereich halten. Ohne besondere Zugabe von Säure oder Lauge kann der gewünschte pH-Bereich eingehalten werden. Nitrifikation und Denitrifikation verlaufen optimal, d.h. ohne Hemmung durch extreme pH-Werte im Belebungsmilieu. Die aerobe und die anoxische Phase können innerhalb eines Arbeitstaktes gegenläufig verändert werden. Dadurch bietet sich die Möglichkeit, den Verfahrensablauf besser der ankommenden CSB-und Stickstoff-Fracht anzupassen. Durch die stoßartige Zufuhr von frischem Abwasser während der anoxischen Phase wird der Denitrifikationsvorgang beschleunigt. Die Nitrifikanten überstehen die anoxische Phase ungeschwächt und nehmen den Nitrifikationsprozeß wieder auf, sobald ausreichend Sauerstoff im Abwasser gelöst ist. Da sich alle Vorgänge in der selben Vorlage abspielen, entfällt das Zurückführen großer Schlamm- und Ablaufwassermengen.

## Beispiel

EP 0 288 961 B1

Im Bereich der Tierhaltung anfallendes Abwasser - täglich ca. 40 m³ - hat folgende Kenndaten:

| pH-Wert | 8 - 10 |
|---|---|
| $BSB_5$ | ca. 10 000 g $O_2$/m³ |
| CSB | ca. 18 000 g $O_2$/m³ |
| Stickstoffhaltige Verbindungen | ca. 1 900 g N/m³, davon |
| Ammonium ($NH_4^+$)-Verbindungen | ca. 1 500 g N/m³ |
| Nitrit ($NO_2^-$)-Verbindungen | 10g N/m³ |
| Nitrat ($NO_3^-$)-Verbindungen | 1g N/m³ |

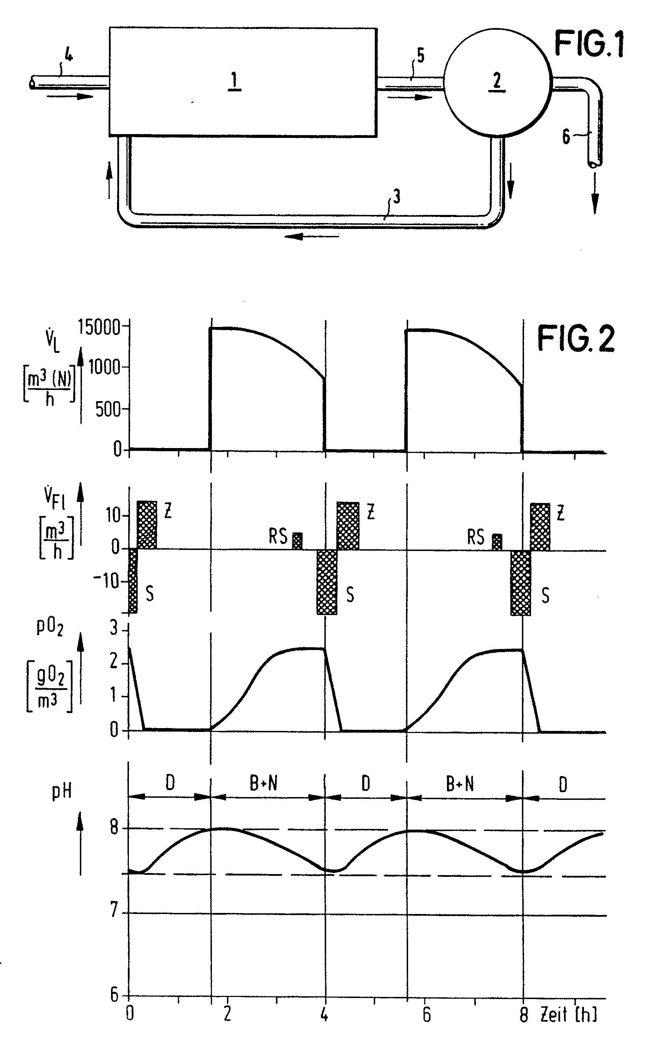

Das Abwasser wird in einem 200 m³ fassenden Belebungstank gemäß Figur 1 bei einer Temperatur zwischen 20 und 25°C nach dem gemäß Figur 2 schematisch dargestellten Verfahren behandelt. Die Belebtschlammkonzentration beträgt gemessen als Trockenmasse des Schlammes (TS) etwa 10 - 12 kg/m³, davon sind etwa 7 bis 9 kg/m³ organische Masse ($TS_{org}$)

Das Abwasser wird stoßweise in 5 bis 6 Takten pro Tag in Mengen von jeweils etwa 6 bis 8 m³ zugeführt. Die mittlere Verweilzeit beträgt ca. 5 Tage. Dabei stellt sich eine Raumbelastung ein von 2 kg $BSB_5$/m³ Tag bzw.
3,6 kg CSB /m³ Tag.

Bei einer Taktdauer von etwa 4 bis 5 Stunden entfallen 40 bis 50 % auf die anoxische Phase. In der übrigen Zeit wird belüftet. Dabei pendelt der pH-Wert zwischen 7,5 und 8.

Der Schlamm hat einen Schlammindex von 70 bis 100 l/kg, d.h. nach einer Absetzzeit von 30 Minuten erhält man 70 bis 100 l Schlamm, der 1 kg Trockenmasse enthält. Der Schlamm läßt sich gut abtrennen. Der Schlammanfall schwankt um Werte von 50 kg Trockenmasse pro Tag.

Im behandelten Abwasser findet man nach dem Dekantieren folgende Ablaufwerte:

| $BSB_5$ | 20 - 60 g $O_2$/m³ |
|---|---|
| CSB | 500 - 600 g $O_2$/m³ |
| $NH_4^+$ | 3 - 10 g N/m³ |
| $NO_2^-$ | 1 g N/m³ |
| $NO_3^-$ | 2 - 5 g N/m³ |

Das entspricht einer Eliminationsrate von

| $BSB_5$ | ca. 99 % |
|---|---|
| CSB | ca. 97 % |
| Stickstoffhaltige Verbindungen | ca. 98 % |

Die Figur 1 zeigt die verwendete Apparatur in schematischer Darstellung und die Figur 2 den Prozeßablauf der biologischen Behandlung in schematischer Darstellung. Dabei ist mit 1 die Vorlage, mit 2 das Klärbecken, mit 5 die Leitung für das Schlammwassergemisch, mit 3 die Leitung für den Rücklaufschlamm, mit 4 die Leitung für die Zufuhr von frischem Abwasser und Luft und mit 6 die leitung für den Klarlauf bezeichnet. In Figur 2 ist die Menge der zugeführten Luft $V_L$, die Menge der zugeführten bzw. abgeführten Flüssigkeiten $V_{FL}$ (Frischwasser Z, Schlammwassergemisch S und Rücklaufschlamm RS), die gelöste $O_2$-Menge $pO_2$ und der pH-Wert über der Zeit aufgetragen. D deutet den Denitrifikationszyklus und B + N den Belebungs- und Nitrifikationszyklus an.

## Patentansprüche

1. Verfahren zur biologischen Behandlung von Abwässern mit erhöhtem Anteil an Stickstoffverbindungen, bei dem der Sauerstoffgehalt des Abwassers ($pO_2$) gemessen und die pro Zeiteinheit eingeblasene Luftmenge mit zunehmendem Sauerstoffgehalt gedrosselt wird, dadurch gekennzeichnet, daß man in einer Vorlage aus Abwasser und Belebtschlamm Luft einleitet, die Luftzufuhr nach Erreichen eines vorgegebenen minimalen pH-Wertes abstellt, eine bestimmte Menge Schlamm-Wasser-Gemisch entnimmt, danach eine äquivalente Menge frisches Abwasser zuführt und nach Erreichen eines vorgegebenen maximalen pH-Wertes erneut Luft und Rücklaufschlamm zuführt.

3

EP 0 288 961 B1

2. Verfahren nach Anspruch 1, dadurch gekennzeichnet, daß die biologische Behandlung bei Temperaturen zwischen 5 und 50° C durchgeführt wird.

3. Verfahren nach Anspruch 1, dadurch gekennzeichnet, daß die bestimmte Menge Schlamm-Wasser-Gemisch während der Behandlung kontinuierlich entnommen und die äquivalente Menge frischen Abwassers kontinuierlich zugeführt wird.

**Claims**

1. A process for the biological treatment of waste waters having an increased content of nitrogen compounds, in which the oxygen content of the waste water (pO$_2$) is measured and the air rate blown in per unit time is restricted with increasing oxygen content, which comprises introducing air into a bulk of waste water and activated sludge, turning off the air feed after a preset minimum pH has been reached, taking out a defined quantity of sludge/water mixture, then feeding an equivalent quantity of fresh waste water and, when a preset maximum pH has been reached, again feeding air and recycled sludge.

2. The process as claimed in claim 1, wherein the biological treatment is carried out at temperatures between 5 and 50° C.

3. The process as claimed in claim 1, wherein the defined quantity of sludge/water mixture is taken off continuously during the treatment and the equivalent quantity of fresh waste water is fed continuously.

**Revendications**

1. Procédé pour le traitement biologique d'eaux résiduaires contenant une proportion élevée de composés azotés, dans lequel on mesure la teneur en oxygène de l'eau résiduaire (pO$_2$) et on réduit la quantité d'air insufflée par unité de temps lorsque la teneur en oxygène augmente, caractérisé en ce qu'on introduit de l'air dans un récipient d'eau résiduaire et de boue activée, on arrête l'introduction d'air lorsqu'un pH minimal fixé à l'avance est atteint, on prélève une quantité déterminée de mélange boue-eau, puis on introduit une quantité équivalente d'eau résiduaire fraîche, et on introduit à nouveau de l'air et de la boue de recyclage lorsqu'un pH maximum, fixé à l'avance, est atteint.

2. Procédé selon la revendication 1, caractérisé en ce que le traitement biologique est effectué à des températures comprises entre 5 et 50° C.

3. Procédé salon la revendication 1, caractérisé en ce que la quantité fixée de mélange boue-eau est prélevée en continu pendant le traitement et la quantité équivalente d'eau résiduaire fraîche est introduite en continu.

4

FIG.1

FIG.2